# EUROPEAN PATENT APPLICATION

(11) **EP 4 738 105 A2**
(43) Date of publication of application: **06.05.2026**
(21) Application number: 26167374.3
(22) Date of filing: 01.09.2022
(51) Int. Cl.: G06F 8/65

(54) **SOFTWARE DEPLOYMENT ON VEHICLES**

(30) Priority: 01.09.2021 US 202163239861 P
(62) Divisional of application: 22778128.3
(71) Applicant: ViaSat, Inc., Carlsbad, CA 92009 (US)
(72) Inventor: FLOYD, Stuart H., Carlsbad, 92009 (US); POZDOLSKI, Connor J., Carlsbad, 92009 (US)
(74) Representative: Appleyard Lees IP LLP

(57) **Abstract**

Described herein are systems and methods for deploying software on mobile venues. The software deployment systems and methods described herein operate using software containers and container orchestrators to provide modular updates to software onboard mobile vehicles. The software deployment systems include a modular update delivery module, a container orchestrator, and a venue update manager. The modular update delivery module maintains a registry of containers. The container orchestrator requests from the modular delivery module a correct version of one or more containers to run. The venue update manager receives order for software for a mobile venue and generates venue specifications based on the ordered software. The modular update delivery module determines which containers in the container registry correspond to the ordered software when a request comes from the container orchestrator and delivers the containers to the mobile venue to deploy the ordered software.

## Description

### CROSS-REFERENCE TO RELATED APPLICATION

This application claims priority to U.S. Prov. App. No. 63/239,861 filed September 1, 2021 and entitled "TECHNIQUES FOR MODULARIZED SOFTWARE UPDATES OF MOBILE TERMINALS," which is expressly incorporated by reference herein in its entirety for all purposes.

### BACKGROUND

### Field

The present disclosure generally relates to maintaining, updating, and deploying software on mobile terminals.

### Description of Related Art

Software management systems typically involve managing a repository of packages installed on a system. If a new software package is to be deployed or an update to a software package is to deployed, the software management system typically determines what to install on the requesting system as well as which supporting libraries are to be installed or updated. The software management system can be configured to resolve dependency issues wherein multiple software packages utilize the same underlying libraries. The software management system can then install or update the software package.

### SUMMARY

In some aspects, the techniques described herein relate to a software deployment system including: a modular update delivery module configured to: receive an updated container; scan the updated container for vulnerabilities; receive deployment characteristics related to the updated container; and specify to which mobile venues the updated container is to be deployed; a container orchestrator implemented on a requesting mobile venue, the container orchestrator configured to send a request to the modular update delivery module for a correct version of one or more containers to run; and a venue update manager configured to: provide a catalog of available software services; receive an order for software to be installed on the requesting mobile venue, the order including requirements for the software and one or more of the available software services; and generate venue specifications based on the ordered software, wherein the modular update delivery module is further configured to: receive, from the venue update manager, the venue specifications based on the ordered software; receive, from the container orchestrator, the request for the correct version of one or more containers to run on the requesting mobile venue; generate a deployable container based on the venue specifications and the one or more containers to run on the requesting mobile venue, the deployable container including the updated container; and transmit to the requesting mobile venue the deployable container, wherein the container orchestrator is further configured to deploy software on the requesting mobile venue using the deployable container.

In some aspects, the techniques described herein relate to a system, wherein the modular update delivery module is further configured to provide a container registry that is configured to store the updated container for installation in the requesting mobile venue.

In some aspects, the techniques described herein relate to a system, wherein the modular update delivery module is further configured to provide a secrets storage configured to provide role-based access controls.

In some aspects, the techniques described herein relate to a system, wherein the modular update delivery module is further configured to monitor a configuration management repository, to detect changes to the configuration management repository, and, responsive to detecting a change in the configuration management repository, transmit changed component files to the requesting mobile venue.

In some aspects, the techniques described herein relate to a system, wherein the container orchestrator is configured to generate an engineering configuration by applying a change overlay to the venue specifications.

In some aspects, the techniques described herein relate to a system, wherein the requesting mobile venue is a mobile vehicle.

In some aspects, the techniques described herein relate to a system, wherein the updated container is configured to be deployed on a server located on the mobile vehicle.

In some aspects, the techniques described herein relate to a system, wherein the modular update delivery module is implemented on a server that is different from a venue on which the container orchestrator is implemented.

In some aspects, the techniques described herein relate to a software deployment system including: a network interface; non-volatile memory configured to store computer-executable instructions; and one or more processors configured to control operation of the network interface and to execute the computer-executable instructions stored on the non-volatile memory, the computer executable instructions configured to cause the software deployment system to: receive a request for software deployment on a server on a mobile venue; generate a venue specification based on the request for software deployment; identify individual components of software to install based on the venue specification; and deliver the identified individual components to the mobile venue server.

In some aspects, the techniques described herein relate to a system, wherein the mobile venue is an aircraft.

In some aspects, the techniques described herein relate to a system, wherein the individual components are delivered in one or more containers.

In some aspects, the techniques described herein relate to a system, wherein the venue specification is configured to ensure compliance with legal regulations related to the mobile venue.

In some aspects, the techniques described herein relate to a system, wherein the venue specification represents changes to a base configuration to accommodate different features or capabilities of the mobile venue.

In some aspects, the techniques described herein relate to a system, wherein the base configuration represents a generic configuration for a plurality of disparate mobile venues.

In some aspects, the techniques described herein relate to a method for deploying software on one or more mobile venues, the method including: receiving a request for new software for a plurality of mobile venues; receiving software based on the request, the software not specific to at least one of the mobile venues; for each mobile venue of the plurality of mobile venues, generating a venue specification for the software, the venue specification based on a base configuration that is generic to the plurality of mobile venues; for each mobile venue of the plurality of mobile venues, delivering one or more containers with the software based on the venue specification specific to the mobile venue; and for each mobile venue of the plurality of mobile venues, generating an engineering configuration based on the venue specification.

In some aspects, the techniques described herein relate to a method, wherein at least one of the plurality of mobile venues is an aircraft.

In some aspects, the techniques described herein relate to a method, wherein the request for new software includes a combination of one or more product entities.

In some aspects, the techniques described herein relate to a method, wherein the venue specification is configured to ensure compliance with legal regulations specific to the particular mobile venue.

In some aspects, the techniques described herein relate to a method, wherein the received software is not compatible with at least one of the plurality of mobile venues and the method further includes employing the engineering configuration to modify at least one aspect of the received software to render the software compatible with the at least one of the plurality of mobile venues.

In some aspects, the techniques described herein relate to a method further including analyzing the received software to detect vulnerabilities or security issues related to each of the plurality of mobile venues.

For purposes of summarizing the disclosure, certain aspects, advantages and novel features have been described herein. It is to be understood that not necessarily all such advantages may be achieved in accordance with any particular embodiment. Thus, the disclosed embodiments may be carried out in a manner that achieves or optimizes one advantage or group of advantages as taught herein without necessarily achieving other advantages as may be taught or suggested herein.

### BRIEF DESCRIPTION OF THE DRAWINGS

FIG. 1 illustrates a software development, management, and deployment configuration that includes a software distributer that deploys software on a mobile venue.
FIG. 2 illustrates an example software deployment system.
FIG. 3 illustrates an example of generating a venue specification by a venue provisioning adapter.
FIG. 4 illustrates an example of generating an engineering configuration on a venue server by a component controller.
FIG. 5 illustrates a venue service updater server that includes a configuration management repository that receives and stores software information from third parties and from the operator of the venue service updater server.
FIG. 6 illustrates the venue service updater server of FIG. 5 configured to generate a set of changes for a target mobile venue server based on a request from a venue service updater client.
FIG. 7 illustrates an example software deployment system.
FIG. 8 illustrates another example software deployment system similar to the software deployment system of FIG. 7.
FIG. 9 illustrates a flow chart of an example method for deploying software in a mobile venue.
FIG. 10 illustrates a flow chart of an example method for developing software for disparate mobile venues.
FIG. 11 illustrates a flow chart of an example method for updating software for mobile venues.

### DETAILED DESCRIPTION

The headings provided herein, if any, are for convenience only and do not necessarily affect the scope or meaning of the claimed invention.

### Overview

Mobile venues (such as aircraft, trains, ships, and automobiles), often have software onboard the mobile venue. The software is configured to interface with various systems (e.g., hardware, navigation, entertainment, etc.) onboard the mobile venue, to interface with pilots or operators of the mobile venue, to interface with support staff, to provide services to passengers, to acquire and analyze information, to manage system resources, and the like. Each mobile venue, or class of mobile venue, may include a different infrastructure (e.g., hardware, sensors, systems, etc.) making it challenging to develop software for a variety of mobile venues or classes of mobile venue without requiring the software to be tailored specifically for the infrastructure of each mobile venue or class of mobile venue. Furthermore, certain mobile venues or classes of mobile venues are subject to regulatory requirements that may add requirements to software being developed. For example, the Federal Aviation Administration (FAA) provides regulatory requirements for software that is to be deployed on a commercial aircraft.

Accordingly, described herein are systems and methods for deploying software on mobile venues. The software deployment systems and methods described herein operate using software containers and container orchestrators to provide modular updates to software onboard the mobile venues. The use of containers allows software to be developed and packaged into one or more containers. The software can be developed with a focus on the functionality of the software and without focusing on the underlying hardware, systems, regulations, etc. The software can then be packaged into one or more containers that are designed to operate on a mobile venue or a specific class of mobile venue. Base configurations or templates can be used for software development. The base configurations are then used to generate venue specifications that are specific to the deployment environment on the mobile venue using configuration change overlays that specify what to change in the base configuration for the deployment environment on the mobile venue. The venue specifications are used to generate the one or more containers for the software to enable deployment of the software on the mobile venues. The venue specifications are thus configured to satisfy, for example, compatibility requirements associated with the mobile venue to enable successful deployment of the software at the mobile venue, wherein the software was developed without necessarily considering the unique requirements of the mobile venue.

Furthermore, the venue specifications can be configured to be delivered to a specific mobile venue server where an engineering configuration is generated by a component controller. The component controller translates or converts the venue specification to the engineering configuration, which is configured to enable deployment of software in the specific environment of the mobile venue server. This allows the venue specification to be defined at a higher level of abstraction or generality to enable software development and deployment without requiring the venue specification be tailored specifically for the environment of the mobile venue on which it is eventually deployed.

The disclosed systems and methods enable delivery of independent component software and configurations. The disclosed systems and methods ensure the resulting software and configuration structure can be extracted and deployed onto the existing operating environment on the mobile venue. The software and configurations can be deployed using over-the-air, local installation, and so forth. The disclosed systems and methods can also enable third parties or employees of the company that operates a particular mobile venue to define parameters and to input software configurations through an interface that are then provided by the disclosed systems and methods to software containers for consumption, thereby allowing for delivery and deployment of the corresponding software on the mobile venue. In this way, the software deployment systems and methods described herein manage the underlying compatibility requirements (such as hardware, firmware, and software compatibilities, regulation requirements, vehicle requirements and compatibilities, etc.) to enable other software development parties to focus on the functionality of the software without worrying about specifics of the mobile venue(s) when developing the software.

In addition, the disclosed systems and methods enable third-party software to be offered to operators of mobile venues along with software provided by the software distributer that manages the software and operation of the servers on the mobile venues. For example, a venue operator may contract with the software distributer to develop and manage the software that runs the venue servers on the mobile venues of the venue operator. In addition to core software and architecture, the software distributer may develop software that provides additional capabilities and functionality and offer this software to the venue operator. Furthermore, the disclosed systems and methods enable other third parties to develop software for the mobile venues without requiring these parties to fully know or understand the underlying software or software environment running on the venue servers of the mobile venues. Thus, the disclosed systems and methods enable a multi-tenant software deployment environment allowing the software distributer and third parties to provide software to venue operators of mobile venues.

The disclosed systems and methods can be configured to be fully automated. In some implementations, human intervention is optional but available (e.g., for approvals). The disclosed systems and methods can be configured to be repeatable, e.g., past system states can be reproducible. For example, the disclosed systems and methods enable production of the combination of configuration (e.g., product entities and engineering configuration) and software (e.g., specific container versions) present at a time in the past, allowing a system to return to a duplicate of a previous state. The disclosed systems and methods can be configured to be user-friendly for human input.

The disclosed systems and methods can be configured to remove or reduce complexity of highly-coupled configuration systems that typically exist and that are used across mobile venues. In particular, the disclosed systems and methods advantageously eliminate repetition of templates or variables across multiple classes of mobile venues (e.g., across multiple airlines). Instead, venue specifications are generated (automatically, semi-automatically, and so forth) through the use of base configurations or templates and applying venue-specific configuration overlays that specify what needs to be changed in the base configuration for a particular mobile venue. The disclosed systems and methods are further configured to move software rendering services (e.g., a container orchestrator) to the mobile venue itself. This allows the rendering service to be individualized to the mobile venue and removes or reduces the need for complex rendering, encrypting, and bundling sequences on servers that are not on the mobile venue (e.g., a ground server or a server hosted by another entity that is not part of the mobile venue). The disclosed systems and methods can be configured to utilize configurations that more closely align with what is on the mobile venue, as opposed to configurations within test environments. Advantageously, the disclosed systems and methods can be configured to provide deployment configurations for individual classes of mobile venues or individual mobile venues, which enables manual testing of productions bundles before deploying the software on a mobile venue.

As used herein, software containers, or containers, include small and lightweight software execution environments that make shared use of an operating system kernel but otherwise run in isolation from one another. A container engine can be installed on a system, the container engine configured to provide isolated access to the kernel and computing resources for software within a container. The container engine can also facilitate deployment and running of containers on the system. Examples of containers and container engines include, for example and without limitation, Docker, Podman, LXC, Containerd, Buildah, Buildkit, Kaniko, and RunC. As used herein, container orchestrators include programs that manage the deployment of containers either in a single system or across multiple systems. Container orchestrators are configured to eliminate manually deploying individual containers onto individual systems. Instead, container orchestrators facilitate deployment and running of containers on a single system or across multiple hosts or systems. Examples of container orchestrators include, for example and without limitation, Kubernetes, Docker Swarm, Nomad, Amazon Elastic Container Service (ECS), RedHat OpenShift, and AWS Fargate.

### Systems for Deploying Software on Mobile Terminals

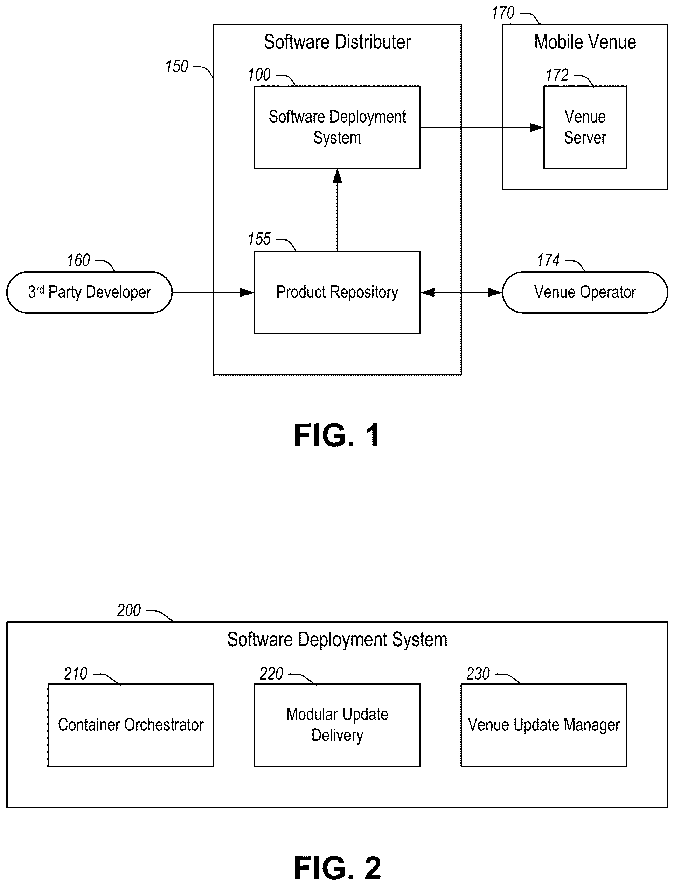

FIG. 1 illustrates a software development, management, and deployment configuration that includes a software distributer 150 that deploys software on a mobile venue 170. The software distributer 150 includes a software deployment system 100 and a product repository 155. The software deployment system 100 can be any of the software deployment systems described herein, such as the software deployment systems described herein with reference to FIGS. 2, 7, and 8.

The software deployment system 100 is configured to manage and deploy software on a venue server 172 onboard the mobile venue 170. In some implementations, the software deployment system 100 can be configured to manage and deploy the software using containers and a container orchestrator. The software deployment system 100 utilizes the technologies and techniques described herein to deploy software to the venue server 172 in a way that allows the software to be developed for a general venue server whereas deployment on the venue server 172 is specific to the mobile venue server 172. This allows the venue server 172 to run the deployed software without necessarily requiring the software be developed for the particular mobile venue 170 or venue server 172.

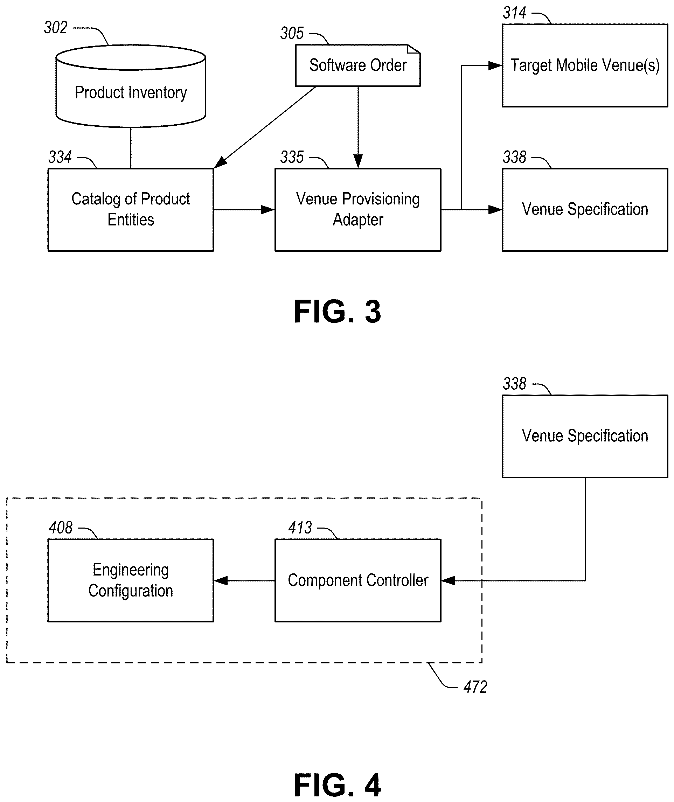

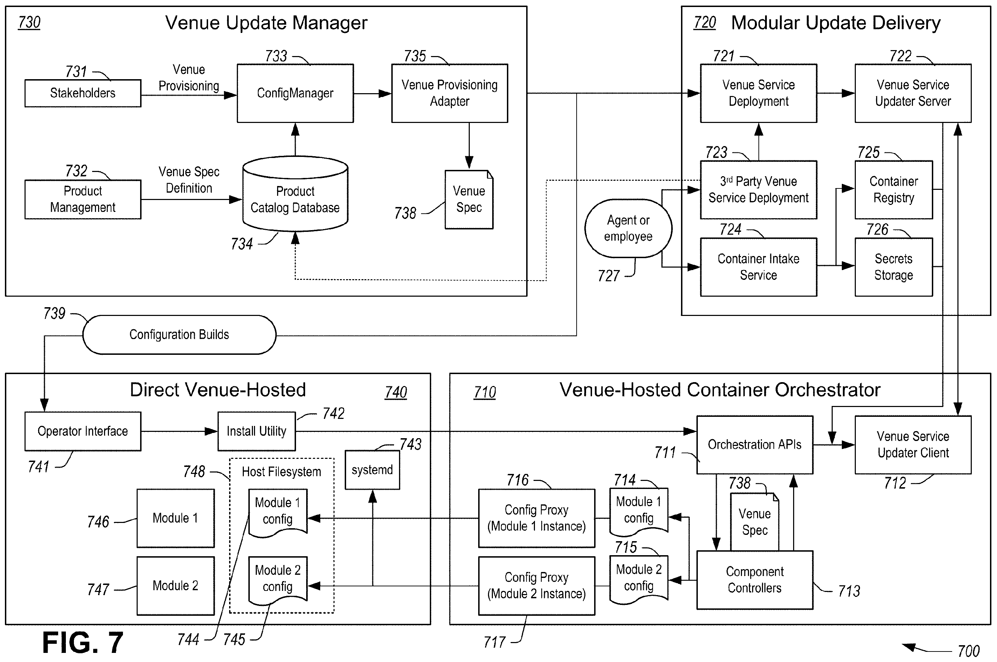

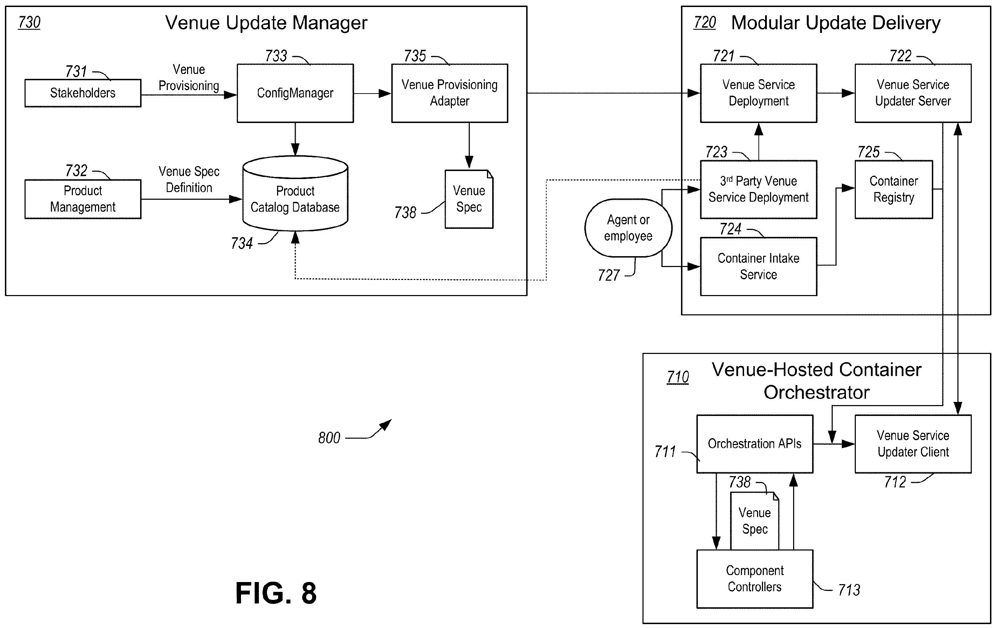

The software deployment system 100 includes the product repository 155 that includes a repository of software and associated configurations. In some implementations, the product repository 155 includes a product inventory database, an example of which is described with reference to FIG. 3. In some implementations, the product repository 155 can be implemented as part of the software deployment system 100 rather than as a separate component or module, examples of which are described herein with reference to FIGS. 7 and 8.

The product repository 155 enables third-party developers 160 to develop software for a variety of mobile venues. The third-party developers 160 develop software independent of the software distributer 150, e.g., without the control of the software distributer 150, and submit developed software and software packages to the product repository 155.

In addition, a venue operator 174 or customer associated with the mobile venue 170 (e.g., an employee or agent of an airline) can submit specifications for software to the product repository 155 or the venue operator 174 can submit software developed for a venue, such as the mobile venue 170, to the product repository 155. In some implementations, the product repository 155 can provide a user interface to the venue operator 174 to allow browsing of software and software packages available to the venue operator 174. The user interface can be graphical and presented in a way that is similar to application stores for mobile phones or other software repositories. Thus, the software distributer 150 can provide an experience similar to a familiar application store through the use of the product repository 155. If the venue operator 174 requests a particular software package be deployed to the mobile venue 170, the software deployment system 100 is configured to generate a deployable configuration of software that is specific or suited to the venue server 172.

The software distributer 150 can be an entity that manages software for deployment on a variety of different venues, such as the mobile venue 170. The software distributer 150 can develop its own software that is included in the product repository 155 and can manage software provided by third-party developers 160 and/or a venue operator 174. The entity that acts as the software distributer 150 can also provide and/or control the software running on the venue server 172. Thus, the software distributer 150 can provide a pipeline for software to be installed and run on the venue server 172, which enables the software distributer 150 to make sure software deployed on the mobile venue 170 complies with venue-specific requirements, including hardware and firmware compatibilities, integration with systems onboard the mobile venue 170, regulatory requirements associated with the mobile venue 170, and the like. Furthermore, the software deployment system 100 is configured to enable the software distributer 150 to update individual pieces of software running on the venue server 172 on board the mobile venue 170.

This software deployment environment differs from typical software deployment and management systems that operate in a data center or in the cloud. Here, the software deployment system 100 operates on or across or involves mobile venues (e.g., vehicles) which typically operate in a regulated environment. The regulatory environment is an aspect that differentiates this software management configuration from other typical configurations. For example, the regulatory environment may require a significantly higher degree of change management processes (e.g., traceability and approvals of deployments of software and configurations) than is typical for the software industry and especially for modern cloud-based technologies, which presents a burden to the software vendor that inhibits rapid innovation. Thus, the software deployment system 100 is configured to enable the software distributer 150 to update individual software components in a way that is aligned with applicable regulatory frameworks as well as standards and practices common to the software industry. In addition, the software deployment system 100 enables this functionality in an agile fashion (e.g., being able to quickly respond to changes or updates in software), in a continuous fashion (e.g., being able to incrementally change individual software components rather than waiting to update an entire software system), and in an automated way (e.g., being able to monitor a software repository and to respond to changes to relevant software packages by deploying software components that incorporate detected changes, and so forth). For example, because software is packaged into containers by the software deployment system 100, the software is automatically configured to run in the specific environment on the venue server 172 without employing typical extensive development and testing cycles. This is due at least in part to the containers providing the necessary computing environment to run the software. This is also due at least in part to the software deployment system 100 applying configuration change overlays to base configurations to result in venue specifications that are specific to the venue server 172 and providing the venue specifications to the venue server 172 to generate engineering configurations, as described herein.

In addition, the software deployment system 100, in conjunction with the product repository 155, enables the software distributer 150 to offer an experience similar to familiar app stores within a mobile access server to the venue operator 174 of the software distributer 150 in circumstances where the software distributer 150 provides computing on the edge for the venue operator 174. The software deployment system 100 is configured to update software and can be used for internally-developed software (e.g., developed by the software distributer 150 and/or the venue operator 174) and externally-developed software (e.g., developed by third-party developers 160). Furthermore, the software deployment system 100 enables a number of software developers that are not currently able to develop software for mobile venues to develop software without requiring these third parties to specifically consider regulatory requirements, venue-specific hardware environments, or other requirements for mobile vehicles. Furthermore, the software deployment system 100 encourages customers to develop software for their own mobile venues because it removes some barriers to entry, such as compliance with venue-specific requirements as described above.

As used herein, the term mobile venue refers to a variety of modes of transportation or vehicles, such as aircraft, cruise ships, automobiles, trains, etc. Furthermore, different classes or types of mobile venues may refer to the variety of different modes of transportation (e.g., aircraft, ship, automobile, rail, etc.) and/or may refer to different varieties of a particular mobile venue (e.g., different airplanes). For example, for an aircraft, the different classes or types of mobile venue can include different airplane sizes and/or manufacturers (e.g., a Boeing 737, a Boeing 777, an Airbus A320, Airbus A330, Bombardier CRJ, wide-body, narrow-body, etc.) and/or it can include different airline operators (e.g., Southwest, American Airlines, Delta Airlines, etc.). The venue server 172 includes any server, such as a bare metal server, or other such computer system that is onboard the mobile venue. The software deployment system 100 is configured to work on and across a number of different classes or types of mobile venues to manage software deployed on the mobile venue.

FIG. 2 illustrates an example software deployment system 200 that can be utilized by the software distributer 150 of FIG. 1. The software deployment system 200 includes a container orchestrator 210, a modular update delivery module 220, and a venue update manager 230. The modular update delivery module 220 maintains a registry of containers as well as a configuration management repository with software components that may be deployed on a mobile venue (e.g., the mobile venue 170 of FIG. 1). The container orchestrator 210 requests from the modular update delivery module 220 a correct version of software to run, which may involve one or more containers. The container orchestrator 210 can be hosted on systems onboard the mobile venue (such as a venue server). The venue update manager 230 receives orders for software for the mobile venue and generates venue specifications based on the ordered software. The modular update delivery module 220 determines which software components in the container registry and/or the configuration management repository correspond to the ordered software when a request comes from the container orchestrator 210 and delivers the relevant software components (e.g., using containers) to the mobile venue to deploy the ordered software.

The modular update delivery module 220 is also configured to receive updated or new containers and to scan them for vulnerabilities, to receive deployment characteristics for the updated containers and the location (e.g., which mobile venue) to deploy the updated container, and to transmit to a mobile venue a correct version of one or more containers to run on a requesting mobile venue. The venue update manager 230 is also configured to provide a catalog of available software services and to receive orders using the catalog of software services. The catalog of available software services can be provided to customers, third parties, stakeholders, engineers, or the like to provide a selection of software services for a mobile venue. As described herein, the catalog can be presented using a user interface on the venue update manager 230 or another device or system, the user interface being configured similar to an application store or repository. Orders can be received from customers, third parties, stakeholders, engineers, or the like using the same or similar interface used to present the selection of software services. In some implementations, the modular update delivery module 220 is configured to run as a service in the cloud. The modular update delivery module 220 is configured to manage software services to enable delivery and deployment of these services to a mobile venue. The modular update delivery module 220 thus enables new services to be deployed across many mobile venues due at least in part to it being configured to receive software, to maintain the software in a registry, and to package the software in containers that are compatible with targeted mobile venues or venue servers.

The container orchestrator 210 is configured to run container-based services. For example, the container orchestrator 210 is configured to integrate in information coming from an avionics bus on an aircraft or navigation systems on a cruise ship. The container orchestrator 210 is configured to integrate in generic services on board a mobile venue, which allows a software distributer to offer a catalog of applications. For example, when a third party or customer wants to develop a food and beverage application to be run on a mobile venue, the container orchestrator 210 enables the software distributer to offer the application on a variety of mobile venues and mobile venue classes without requiring specific development for each mobile venue or mobile venue class. In some implementations, the container orchestrator 210 is integrated into the venue server on the mobile venue. In some implementations, the container orchestrator 210 is integrated into ground-based systems.

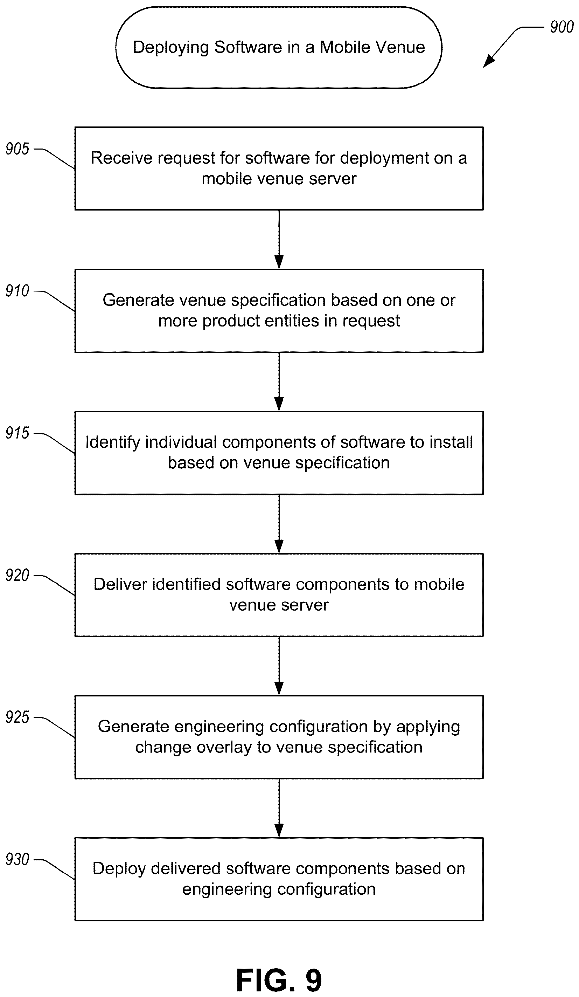

Although not illustrated, the software deployment system 200 includes a network interface that enables network communication with external systems, such as a venue server, a product repository, and third-party systems. Similarly, the software deployment system 200 includes non-volatile memory configured to store configurations, software, and computer-executable instructions. The software deployment system 200 also includes one or more processors configured to control operation of the network interface and to execute the computer-executable instructions stored on the non-volatile memory. The computer executable instructions are configured to cause the software deployment system 200 to perform any of the methods described herein, such as the methods described herein with reference to FIGS. 9-11. In some implementations, the software deployment system 200 is implemented in a distributed computing environment.

FIG. 3 illustrates an example of generating a venue specification 338 by a venue provisioning adapter 335. The venue provisioning adapter 335 is similar to the venue provisioning adapter 735 described herein with reference to FIGS. 7 and 8. Similarly, the venue specification 338 is similar to the venue specification 738 described herein with reference to FIGS. 7 and 8. A catalog of product entities 334 can be provided that represents a list of software services available for purchase. The product entities are thus software services and can include abstractions that are then translated by the software deployment systems described herein into a configuration, software, and the like. The product entities in the catalog of product entities 334 can be product entities that are available to a customer and/or that are available and/or compatible with a mobile venue, or a class of mobile venues. The catalog of product entities 334 is similar to the product catalog database 734 described herein with reference to FIGS. 7 and 8. The catalog of product entities 334 can populate this list from a product inventory 302 data store that stores a list of software services that are available to a variety of customers, to a variety of mobile venues, and/or to a variety of classes of mobile venues. The catalog of product entities 334 can be presented using an interface similar to an app store or other software repository, as described herein.

The venue provisioning adapter 335 can receive a software order 305 that indicates one or more product entities for deployment on one or more target mobile venues 314. Based on the software order 305, the venue provisioning adapter 335 generates the venue specification 338 that includes the one or more product entities indicated in the software order 305. The venue specification 338 includes programmatic and/or database entities that include the one or more product entities identified in the software order 305. The venue specification 338 is specific to a particular mobile venue or class of mobile venues, such as the target mobile venues 314.

The venue provisioning adapter 335 is also configured to identify, to indicate, or to generate a list of target mobile venues 314 based on the software order 305, the target mobile venues 314 including mobile venues targeted for deployment of the product entities included in the venue specification 338. For example, the software order 305 can indicate one or more mobile venues to receive the product entities included in the venue specification 338. The venue provisioning adapter 335 is thus configured to ensure, along with other components describes herein, that a mobile venue receives the software configuration appropriate for the mobile venue by generating the venue specification 338.

FIG. 4 illustrates an example of generating an engineering configuration 408 on a venue server 472 by a component controller 413. The venue server 472 is similar to the venue server 172 described herein with reference to FIG. 1 and the component controller 413 is similar to the component controller 713 described herein with reference to FIGS. 7 and 8. The component controller 413, operating on the venue server 472, receives the venue specification 338 (as described with reference to FIG. 3). The component controller 413 is configured to convert the venue specification 338 to the engineering configuration 408. In some implementations, the venue specification 338 is a combination of one or more product entities described in a programmatic, rather than descriptive, fashion. That is, the venue specification 338 is not configured to describe the product entities in a fashion that is typical to software specifications prepared by humans. Rather, the venue specification 338 is configured to be read by software programs to enable bundling, distribution, and deployment of software. The component controller 413 is configured to read the venue specification 338 and to generate the engineering configuration 408 that is a configuration specific to the mobile venue server 472. For example, the engineering configuration 408 can include details about how to run the software defined in the venue specification 338 in a way that is not intended for a customer to read and understand. In other words, the engineering configuration 408 is configured to enable systems on the mobile venue server 472 to deploy and execute the software defined in the engineering configuration 408 by indicating how the software is supposed to execute on the mobile venue server 472.

In some implementations, the venue specification 338 is similar to a base configuration that does not include implementation details specific to a particular venue server. The component controller 413 can be configured to apply a configuration change overlay to the venue specification 338 to generate the configuration variant referred to as the engineering configuration 408. This configuration variant, the engineering configuration 408, is generated onboard the mobile venue server 472. This is advantageous because it allows the software to be maintained and managed at a level of abstraction above the mobile venue server 472, only requiring the software to be specifically configured to operate in a particular environment once the software has been delivered to the mobile venue server 472 for deployment.

In some implementations, the venue specification 338 can be a generic configuration for a mobile venue. The venue specification 338 can be developed to apply to a variety of mobile venues or classes of mobile venues. Similarly, the venue specification 338 can be developed to apply to a variety of classes of programs (e.g., passenger-facing programs, systems management programs, etc.). In some implementations, the venue specification 338 represents a generic configuration for a plurality of disparate mobile venues.

The component controller 413 is configured to change (e.g., to add or update) the venue specification 338 based on the requirements of the mobile venue server 472 and/or configuration of the mobile venue. The engineering configuration 408 is configured to be a server-specific configuration to enable deployment of individual software components or a software package on the mobile venue server 472. In some implementations, the venue specification 338 and/or the engineering configuration 408 is configured to ensure compliance with legal regulations related to the mobile venue on which the software is to be deployed.

Advantageously, the combination of the venue specification 338 and the component controller 413 enables the development of software that may be generic to a specific mobile venue that can then be configured to operate on the specific mobile venue using the engineering configuration 408. Similarly, the combination of the venue specification 338 and the component controller 413 enables the development of software that may not be developed to be compliant with regulations associated with a specific mobile venue that can then be configured to comply with such regulations on the specific mobile venue using the engineering configuration 408.

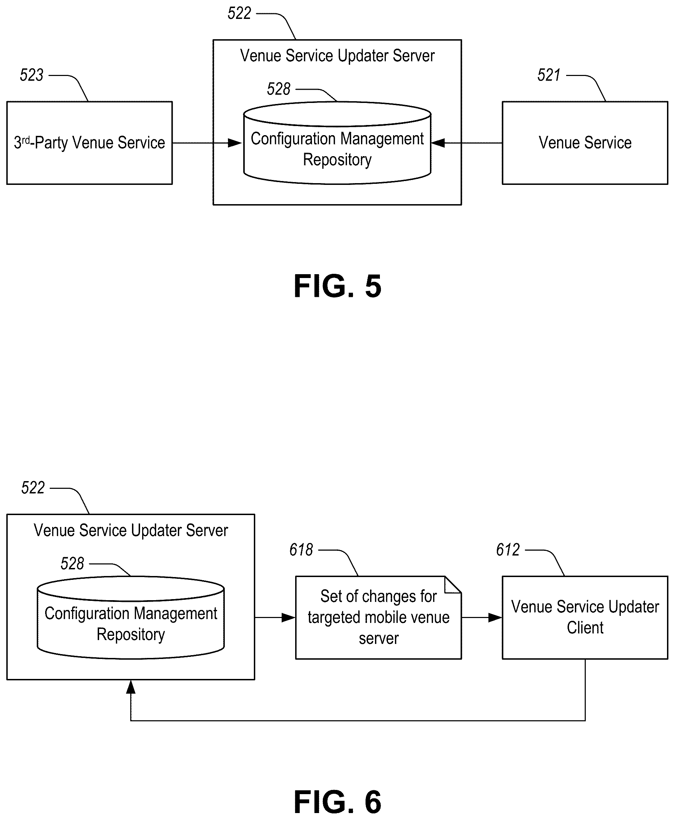

FIG. 5 illustrates a venue service updater server 522 that includes a configuration management repository 528 that receives and stores software information from third parties and from the operator of the venue service updater server 522. The venue service updater server 522 is similar to the venue service updater server 722 described herein with reference to FIGS. 7 and 8. The configuration management repository 528 can include a data store with software components stored thereon. In some implementations, individual software components can be stored in individual folders in the configuration management repository 528.

As described herein, the configuration management repository 528 can store information related to software provided by a third party, such as through a third-party venue service 523 (similar to the third-party venue service deployment module 723 described herein with reference to FIGS. 7 and 8). Similarly, the configuration management repository 528 can store information related to software provided by the software distributer managing the software running on the mobile venue server, such as through a venue service 521 (similar to the venue service deployment module 721 described herein with reference to FIGS. 7 and 8).

FIG. 6 illustrates the venue service updater server 522 of FIG. 5 configured to generate a set of changes for a target mobile venue server based on a request from a venue service updater client 612. The venue service updater client 612 is similar to the venue service updater client 712 described herein with reference to FIGS. 7 and 8. In some implementations, the venue service updater server 522 is configured to monitor the configuration management repository 528 for changes, additions, or updates to software stored thereon. In response to detecting a change, addition, or update, the venue service updater server 522 is configured to generate a set of changes for the targeted mobile venue server, represented as a change set 618. The change set 618 is received by the venue service updater client 612, which can then execute any indicated changes using a container orchestrator, as described herein. In some implementations, the venue service updater client 612 is configured to send a request to the venue service updater server 522 for a current or up-to-date software list to identify any updates or changes that need to be made to the software on the mobile venue server.

The configuration management repository 528 can include a repository of software and components of software developed for use on mobile venues. In some implementations, the configuration management repository 528 includes component directories for individual components of the software for use on mobile venues. The venue service updater server 522 can be configured to read from each component directory in the configuration management repository 528 and detect updates or changes thereto. Responsive to detecting an update or change to a directory in the configuration management repository 528, the venue service updater server 522 is configured to identify the changes and to send the change set 618 indicating the identified changes to the venue service updater client 612. In some implementations, individual components of software are contained in one or more containers to facilitate deployment on the mobile venue server. Deployment of the software indicated in the change set 618 can be managed by a container orchestrator, as described herein.

### Example Software Deployment Systems

FIG. 7 illustrates an example software deployment system 700. The software deployment system 700 includes a venue-hosted container orchestrator 710, a modular update delivery module 720, a venue update manager 730, and a direct venue-hosted module 740. The venue-hosted container orchestrator 710 is similar to the container orchestrator 210 described herein with reference to FIG. 2. The venue-hosted container orchestrator 710 can be installed and run on a venue server, as described herein. The modular update delivery module 720 is similar to the modular update delivery module 220 described herein with reference to FIG. 2. The modular update delivery module 720 can be installed and run on a ground-based server (or a server that is not part of a mobile venue). The venue update manager 730 is similar to the venue update manager 230 described herein with reference to FIG. 2. The venue update manager 730 can be installed and run on a ground-based server (or a server that is not part of a mobile venue).

The venue-hosted container orchestrator 710 includes orchestration APIs 711, a venue service updater client 712, and component controllers 713. The modular update delivery module 720 includes a venue service deployment module 721, a venue service updater server 722, a third-party venue service deployment module 723, a container intake service 724, a container registry 725, and a secrets storage 726. The venue update manager 730 includes a configuration manager 733, a product catalog database 734, and a venue provisioning adapter 735. The direct venue-hosted module 740 includes an operator interface 741, an install utility 742, a system daemon 743, a first module 746, a second module 747, and a host file system 748.

The venue update manager 730 receives stakeholder input 731 from stakeholders (e.g., personnel or systems that own or operate a mobile venue). The stakeholder input 731 can be used to define software requirements or capabilities to be provided in software provisioned on a mobile venue. The configuration manager 733 can be configured to provide options to the stakeholders to identify or define software capabilities or options, thereby enabling stakeholders to select options that are possible to provision on a mobile venue or a class of mobile venues. In some implementations, the configuration manager 733 is configured to interface with the product catalog database 734 to provide compatible options for software to the stakeholders, who then provide stakeholder input 731. This enables the venue update manager 730 to provide the ability to specify requirements for software services that are to be run on a mobile venue and to describe desired features at a high level. As described herein, the product catalog database 734 can include a list of product entities available to install on mobile venues. The product entities can be provided by the software distributer or by a third party (as illustrated by the dotted line from the third-party venue service deployment module 723, indicating that software produced by a third party can be presented as available to a customer or stakeholder). Product management input 732 can be provided to generate a venue specification definition, for example that includes detailed requirements for the software to be provisioned on the mobile venue.

In some implementations, the venue update manager 730 takes orders for software that the venue owner or operator desires to be provisioned on the mobile venue. The configuration manager 733 is configured to make sure the requested or ordered features map onto actual services available and/or capable of being implemented on the mobile venue. The configuration manager 733 can be configured to represent a product catalog, similar to an app store for a mobile phone or other mobile device, wherein the product catalog is represented in a way that presents options or programs that are capable of being provisioned on the mobile venue of the stakeholders. The options presented can be provided by the software distributer (e.g., the entity developing and managing the mobile venue server software) or by a third party.

Based on the stakeholder input 731 and the output of the configuration manager 733, the venue provisioning adapter 735 generates a venue specification 738, as described herein. The venue specification 738 contains the configuration specific to the mobile venue on which the software is to be deployed. In some implementations, the venue update manager 730 is configured to generate the venue specification 738 by adapting a base configuration based on elements specific to a target mobile venue. This allows the venue update manager 730 to receive orders (e.g., based on stakeholder input 731 and/or product management input 732) for software to be deployed on a mobile venue, the orders being fulfilled by the venue service deployment module 721 of the modular update delivery module 720 and being deployed by the orchestration APIs 711 of the venue-hosted container orchestrator 710.

The modular update delivery module 720 is configured to interface with agents or employees 727, which can include agents of a third party, to receive software or software packages. The modular update delivery module 720 is also configured to interface with the venue update manager 730 to receive orders for software or software packages (e.g., that have been ordered by the stakeholder input 731 and/or product management input 732). The container intake service 724 receives updated containers (e.g., that may be provided by a software developer). The updated containers are stored in the container registry 725. In some implementations, the container intake service 724 receives updated specifications. The container intake service 724 is also configured to scan updated containers for vulnerabilities and security issues. If the updated containers contain vulnerabilities or security issues, the updated containers are rejected and not put into the container registry 725. This ensures for the software distributer and the owner of the mobile venue that updated or new containers are safe to run on the mobile venue.

The third-party venue service deployment module 723 provides an interface to receive input from a third party, similar to the stakeholder input 731 of the venue update manager 730 for stakeholders. The third-party venue service deployment module 723 enables third-party agents an interface to specify how containers are to be deployed and/or deployment characteristics. Deployment characteristics can include how many mobile venues and what classes of mobile venues can receive the updated or new containers. The third-party venue service deployment module 723 is also configured to take updates from the agent or employee 727, such as configuration or other such updates, and to specify to where the updates are to be deployed. The information input into the third-party venue service deployment module 723 can be used to add product entities to the product catalog database 734, the product entities being provided by the agent or employee 727.

The container registry 725 contains the updated containers received from the container intake service 724 that have been determined to not contain security and vulnerability issues by the container intake service 724. The secrets storage 726 stores sensitive information. For example, the secrets storage 726 stores authentication or other sensitive information and can be used to provide role-based access controls. Where a configuration for software requires credentials, the credentials can be stored in the secrets storage 726 to prevent secure information from being accessed. The configurations from the container registry 725 and secrets storage 726 can be used to update deployed software.

The venue service deployment module 721 provides similar services as the third-party venue service deployment module 723 for software ordered or defined through the venue update manager 730. In other words, the venue service deployment module 721 receives information from the venue update manager 730, the information defining software to be deployed on the venue server. The venue service deployment module 721 can also be configured to receive similar information from the third-party venue service deployment module 723. In this way, the venue service updater server 722 can receive information from the venue service deployment module 721 that includes software defined by the venue update manager 730 and by the agent or employee 727 (e.g., through the third-party venue service deployment module 723). The venue service updater server 722 is configured to communicate with individual mobile venues, e.g., through a venue-hosted container orchestrator 710 implemented on the venue server of the mobile venue. When a venue server comes online, the venue service updater client 712 checks in with the venue service updater server 722 to determine the correct versions of the software to be run on the venue server. This may comprise the venue service update client 712 sending a request for the correct versions of the software based on one or more parameters of or associated with the venue server (e.g., of the mobile venue, etc.). Alternatively, the venue service update client 712 may merely provide the one or more parameters of or associated with the venue server without an explicit request for the correct versions of the software. The venue service updater server 722 determines the correct versions of the software to run and, if necessary, generates a change set (as described herein) that indicates the software components to change. In some implementations, the software components can be updated or changed using one or more containers. The venue service updater server 722 can be configured to send the change set and/or the one or more containers to the venue-hosted container orchestrator 710 for deploying the updates or changes on the venue server. The venue service updater server 722 can determine the correct versions of the software by communicating with the container registry 725 and the secrets storage 726. Thus, the venue service updater server 722 and/or the container registry 725 are configured to store configurations associated with individual mobile venues to be able to determine the correct and up-to-date versions of the software to run on the mobile venue. Similarly, the venue service updater server 722 can monitor a configuration management repository, as described herein, to determine the correct versions of the software to run.

The venue-hosted container orchestrator 710 uses the orchestration APIs 711 to deploy the updates indicated by the venue service updater server 722. The orchestration APIs 711 uses the venue specification 738 and the component controllers 713 to generate engineering configurations, as described herein, to deploy the updates or changes on the venue server. The component controllers 713 are configured to generate the engineering configurations from the venue specification 738 by applying server-specific configurations to the venue-specific configuration of the venue specification 738. This enables the software stored in the modular update delivery module 720 to be tailored to run in the environment of the venue server in which the venue-hosted container orchestrator 710 operates. In some implementations, the component controllers 713 can be configured to generate module-specific configurations (e.g., engineering configurations) for modules that can be proxied on the venue-hosted container orchestrator 710, such as the module configurations 714 and 715. The venue-hosted container orchestrator 710 can run configuration proxies 716, 717 (e.g., module instances of the module configurations 714, 715) to facilitate deployment of the modules (e.g., representing updated software determined by the venue service updater server 722) on the venue server.

The direct venue-hosted module 740 can be used to enable operator input in the deployment process. Configuration builds 739 are generated from the venue provisioning adapter 735 and act as input for the operator interface 741. The operator interface 741 sends input from an operator to the install utility 742 that then interfaces with the orchestration APIs 711. This allows an operator to provide operator input or guidance during the deployment process. As discussed with reference to FIG. 8, this is optional because the deployment process can be fully automated, meaning that the deployment process can proceed without operator input from the operator interface 741 and install utility 742.

The direct venue-hosted module 740 includes the system daemon 743 that monitors the configuration proxies 716, 717 on the venue-hosted container orchestrator 710, which can trigger actions on the direct venue-hosted module 740. For example, a trigger can include the delivery of the venue specification 738 that is converted to an engineering configuration, meaning the presence of a new engineering configuration can trigger the direct venue-hosted module 740 to consume the new engineering configuration. The module configurations 714, 715 can be mirrored on the host file system 748 of the direct venue-hosted module 740 as module configurations 744, 745 to configure operation of the modules 746, 747 that are proxied on the venue-hosted container orchestrator 710. This enables a user to view and monitor deployment of the modules 746, 747, representing the updated or deployed software modules on the venue server.

FIG. 8 illustrates another example software deployment system 800 similar to the software deployment system 700 of FIG. 7. The software deployment system 800 removes the direct venue-hosted module of the software deployment system 700 as well as various elements of the other components of the software deployment system 700 to illustrate optional portions of the software deployment system 700.

In particular, the venue update manager 730 of the software deployment system 800 is the same as in the software deployment system 700. The modular update delivery module 720 of the software deployment system 800 removes the secrets storage relative to the software deployment system 700. The venue-hosted container orchestrator 710 of the software deployment system 800 removes the module configurations and module proxies relative to the software deployment system 700.

Accordingly, the software deployment system 800 includes the modular update delivery module 720 that is configured to receive an updated container (e.g., using the third-party venue service deployment module 723, the container intake service 724, or the venue update manager 730), to scan the updated container for vulnerabilities, to receive deployment characteristics related to the updated container (e.g., from the third-party venue service deployment module 723, the container intake service 724, or the venue update manager 730), to specify to where the updated container is deployed from the venue service deployment module 721, and to transmit to the venue service updater client 712 a correct version of one or more containers to run on the requesting mobile venue. The current and correct versions of one or more containers can be stored in the container registry 725. The modular update delivery module 720 is also configured to receive an order for software to be deployed on the venue server from the venue update manager 730, to receive deployment characteristics of the ordered software, and to specify to where the ordered software is deployed from the venue service deployment module 721.

The software deployment system 800 also includes the venue-hosted container orchestrator 710 that is configured to send a request to the modular update delivery module 720 for a correct version of one or more containers to run. The software deployment system 800 also includes the venue update manager 730 that is configured to provide a catalog of available software services, to receive an order for software to be installed on a venue server (the order including requirements for the software and one or more of the software services), and to generate venue specifications 738 based on the ordered software. In response, the modular update delivery module 720 is further configured to provide updates to software or new software based on the ordered software using the venue service deployment module 721. Accordingly, the venue update manager 730 is configured to generate the venue specification 738 based at least in part on a received order, that can be received from stakeholders using stakeholder input 731 and/or product management input 732. The ordered software, which may be represented by the venue specification 738, is provided to the venue service deployment module 721, which can use the venue specification 738 in conjunction with the venue service updater server 722 to provide deployable containers to targeted venue servers based at least in part on information from the venue servers and software packages received from the agent or employee 727 and/or the venue specification 738. The venue-hosted container orchestrator 710 is then configured to deploy the received deployable container(s). In some implementations, the software or containers received by way of the agent or employee 727 can be separate from the catalog of software services provided by the venue update manager 730, can be updates to products in the catalog of software services, or they can be additions to the catalog of software services.

In some implementations, the container registry 725 is configured to store updated containers for installation in the requesting mobile venue. In some implementations, the venue service updater server 722 is further configured to monitor a configuration repository, as described herein, to detect changes to the configuration repository, and, responsive to detecting a change in the configuration repository, to retrieve changed component files and to bundle the changed component files for deployment. In some implementations, a software order is used to generate the venue specification 738 and one or more targeted mobile venues to ensure the requesting mobile venue receives a tailored configuration for the updated container, examples of which are described with reference to FIG. 3.

### Methods for Deploying Software on Mobile Terminals

FIG. 9 illustrates a flow chart of an example method 900 for deploying software in a mobile venue. For ease of description, the method 900 is described as being performed by a software deployment system, such as the software deployment systems described herein with reference to FIGS. 1, 2, 7, and 8. However, it is to be understood that any portion of the method 900 can be performed by a different system or by individual components of the software deployment system.

In block 905, the software deployment system receives a request for software deployment on a mobile venue server. The request can come from a mobile venue or from a venue-hosted service, such as a container orchestrator as described herein. In some implementations, the request can come from an operator or a third-party.

In block 910, the software deployment system generates a venue specification for the mobile venue server based on one or more product entities indicated in the request for software in block 905. The venue specification can be generic to one or more mobile venues. The venue specification can be configured to be specific to the mobile venue on which the mobile venue server is disposed.

In block 915, the software deployment system identifies individual components of software to install based on the venue specification. The software deployment system can interface with a configuration management repository and/or container registry to identify portions of software to be deployed based on the current status of the software on the mobile venue and/or based on updates to the software running in the mobile venue. The venue specification may also result in new containers being installed on the mobile venue.

In block 920, the software deployment system delivers the identified software components to the mobile venue server. A container orchestrator can be configured to manage deployment of the individual software components using containers and container orchestrators.

In block 925, the software deployment system generates engineering configurations by applying a change overlay to the venue specification. The engineering configurations are specific to the operating environment of the venue server on which the software is deployed. In block 930, the software deployment system deploys the delivered software components based on the engineering configuration. This allows for the software to be maintained and developed in a way that is not necessarily specific to the operating environment of the venue server, being configured once it is on the venue server using the engineering configurations.

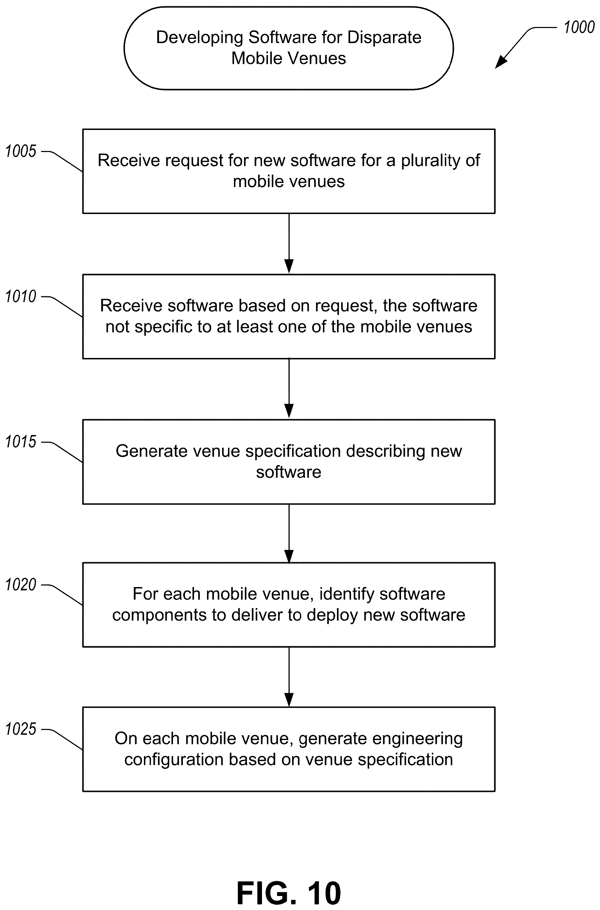

FIG. 10 illustrates a flow chart of an example method 1000 for developing software for disparate mobile venues. For ease of description, the method 1000 is described as being performed by a software deployment system, such as the software deployment systems described herein with reference to FIGS. 1, 2, 7, and 8. However, it is to be understood that any portion of the method 1000 can be performed by a different system or by individual components of the software deployment system.

In block 1005, the software deployment system receives a request for new software for a plurality of mobile venues. In block 1010, the software deployment system receives software based on the request, the software not specific to at least one of the mobile venues. In block 1015, for each mobile venue of the plurality of mobile venues, the software deployment system generates a venue specification for the software, the venue specification specific to the mobile venue. In block 1020, for each mobile venue of the plurality of mobile venues, the software deployment system delivers one or more containers with the software based on the venue specification specific to the mobile venue. In block 1025, for each mobile venue, the software deployment system generates an engineering configuration specific to the venue server onboard the mobile venue by applying a change overlay to the venue specification, as described herein.

In some implementations, at least one of the plurality of mobile venues is an aircraft. In some implementations, the venue specification and/or engineering configuration is configured to ensure compliance with regulations (e.g., legal regulations) specific to the particular mobile venue. In some implementations, the software deployment system analyzes the received software to detect vulnerabilities or security issues related to each of the plurality of mobile venues.

In some implementations, the received software is not compatible with at least one of the plurality of mobile venues. In such instances, the software deployment system employs a change overlay to the venue specification to modify at least one aspect of the received software to render the software compatible with the at least one of the plurality of mobile venues.

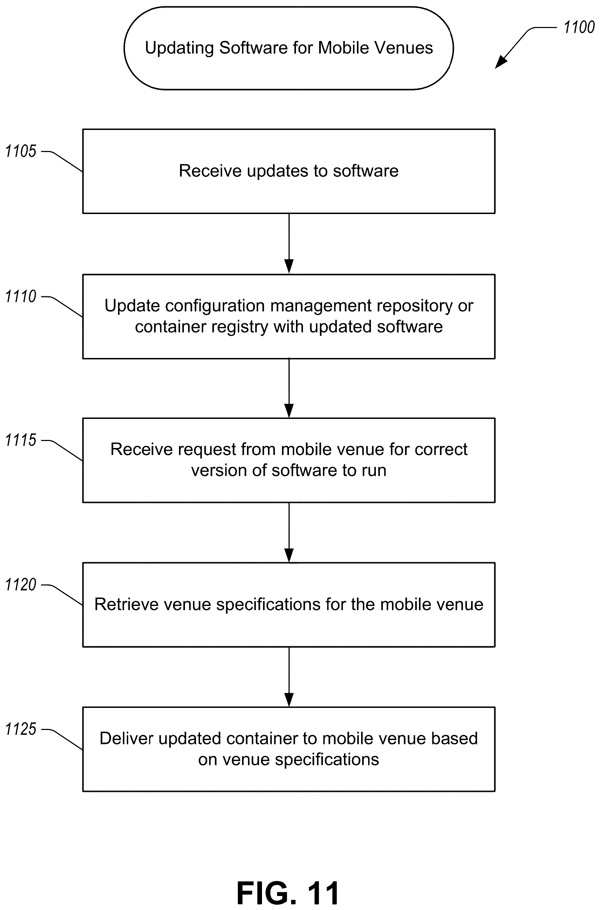

FIG. 11 illustrates a flow chart of an example method 1100 for updating software for mobile venues. For ease of description, the method 1100 is described as being performed by a software deployment system, such as the software deployment systems described herein with reference to FIGS. 1, 2, 7, and 8. However, it is to be understood that any portion of the method 1100 can be performed by a different system or by individual components of the software deployment system.

In block 1105, the software deployment system receives an update to software, which may include a container provided by a third party. This can happen using a container intake service, as described herein. In block 1110, the software deployment system updates the configuration management repository or container registry with the updated software. In block 1115, the software deployment system receives a request from a mobile venue for a correct version of software to run. In block 1120, the software deployment system retrieves venue specifications for the mobile venue. In block 1125, the software deployment system delivers the updated software components (e.g., using containers) to the mobile venue based on the venue specifications.

### Terminology and Additional Embodiments

The present disclosure describes various features, no single one of which is solely responsible for the benefits described herein. It will be understood that various features described herein may be combined, modified, or omitted, as would be apparent to one of ordinary skill. Other combinations and sub-combinations than those specifically described herein will be apparent to one of ordinary skill, and are intended to form a part of this disclosure. Various methods are described herein in connection with various flowchart steps and/or phases. It will be understood that in many cases, certain steps and/or phases may be combined together such that multiple steps and/or phases shown in the flowcharts can be performed as a single step and/or phase. Also, certain steps and/or phases can be broken into additional sub-components to be performed separately. In some instances, the order of the steps and/or phases can be rearranged and certain steps and/or phases may be omitted entirely. Also, the methods described herein are to be understood to be open-ended, such that additional steps and/or phases to those shown and described herein can also be performed.

Some aspects of the systems and methods described herein can advantageously be implemented using, for example, computer software, hardware, firmware, or any combination of computer software, hardware, and firmware. Computer software can comprise computer executable code stored in a computer readable medium (e.g., non-transitory computer readable medium) that, when executed, performs the functions described herein. In some embodiments, computer-executable code is executed by one or more general purpose computer processors. A skilled artisan will appreciate, in light of this disclosure, that any feature or function that can be implemented using software to be executed on a general purpose computer can also be implemented using a different combination of hardware, software, or firmware. Furthermore, the features and functions described herein may be described as being part of a module or being provided by a module. Thus, as used herein, a module is to be understood to mean a collection of computer-executable instructions that may be contained within a system or distributed across different systems. The term module can also include modules that are implemented completely in hardware using a combination of integrated circuits. Alternatively or additionally, modules can be implemented completely or partially using specialized computers designed to perform the particular functions described herein rather than by general purpose computers.

Multiple distributed computing devices can be substituted for any one computing device described herein. In such distributed embodiments, the functions of the one computing device are distributed (e.g., over a network) such that some functions are performed on each of the distributed computing devices.

Some embodiments may be described with reference to equations, algorithms, and/or flowchart illustrations. These methods may be implemented using computer program instructions executable on one or more computers. These methods may also be implemented as computer program products either separately, or as a component of an apparatus or system. In this regard, each equation, algorithm, block, or step of a flowchart, and combinations thereof, may be implemented by hardware, firmware, and/or software including one or more computer program instructions embodied in computer-readable program code logic. As will be appreciated, any such computer program instructions may be loaded onto one or more computers, including without limitation a general purpose computer or special purpose computer, or other programmable processing apparatus to produce a machine, such that the computer program instructions which execute on the computer(s) or other programmable processing device(s) implement the functions specified in the equations, algorithms, and/or flowcharts. It will also be understood that each equation, algorithm, and/or block in flowchart illustrations, and combinations thereof, may be implemented by special purpose hardware-based computer systems which perform the specified functions or steps, or combinations of special purpose hardware and computer-readable program code logic means.

Furthermore, computer program instructions, such as embodied in computer-readable program code logic, may also be stored in a computer readable memory (e.g., a non-transitory computer readable medium) that can direct one or more computers or other programmable processing devices to function in a particular manner, such that the instructions stored in the computer-readable memory implement the function(s) specified in the block(s) of the flowchart(s). The computer program instructions may also be loaded onto one or more computers or other programmable computing devices to cause a series of operational steps to be performed on the one or more computers or other programmable computing devices to produce a computer-implemented process such that the instructions which execute on the computer or other programmable processing apparatus provide steps for implementing the functions specified in the equation(s), algorithm(s), and/or block(s) of the flowchart(s).

Some or all of the methods and tasks described herein may be performed and fully automated by a computer system. The computer system may, in some cases, include multiple distinct computers or computing devices (e.g., physical servers, workstations, storage arrays, etc.) that communicate and interoperate over a network to perform the described functions. Each such computing device typically includes a processor (or multiple processors) that executes program instructions or modules stored in a memory or other non-transitory computer-readable storage medium or device. The various functions disclosed herein may be embodied in such program instructions, although some or all of the disclosed functions may alternatively be implemented in application-specific circuitry (e.g., ASICs or FPGAs) of the computer system. Where the computer system includes multiple computing devices, these devices may, but need not, be co-located. The results of the disclosed methods and tasks may be persistently stored by transforming physical storage devices, such as solid state memory chips and/or magnetic disks, into a different state.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." The word "coupled", as generally used herein, refers to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the above Detailed Description using the singular or plural number may also include the plural or singular number respectively. The word "or" in reference to a list of two or more items, that word covers all of the following interpretations of the word: any of the items in the list, all of the items in the list, and any combination of the items in the list. The word "exemplary" is used exclusively herein to mean "serving as an example, instance, or illustration." Any implementation described herein as "exemplary" is not necessarily to be construed as preferred or advantageous over other implementations.

The disclosure is not intended to be limited to the implementations shown herein. Various modifications to the implementations described in this disclosure may be readily apparent to those skilled in the art, and the generic principles defined herein may be applied to other implementations without departing from the spirit or scope of this disclosure. The teachings of the invention provided herein can be applied to other methods and systems, and are not limited to the methods and systems described above, and elements and acts of the various embodiments described above can be combined to provide further embodiments. Accordingly, the novel methods and systems described herein may be embodied in a variety of other forms; furthermore, various omissions, substitutions and changes in the form of the methods and systems described herein may be made without departing from the spirit of the disclosure. The accompanying claims and their equivalents are intended to cover such forms or modifications as would fall within the scope and spirit of the disclosure.

The following clauses may be useful for understanding the subject-matter of the present disclosure.
1. A software deployment system comprising:
   a modular update delivery module configured to:
      receive an updated container;
      scan the updated container for vulnerabilities;
      receive deployment characteristics related to the updated container; and
      specify to which mobile venue the updated container is to be deployed;
      a container orchestrator implemented on a requesting mobile venue, the container orchestrator configured to send a request to the modular update delivery module for a correct version of one or more containers to run; and
      a venue update manager configured to:
         provide a catalog of available software services;
         receive an order for software to be installed on the requesting mobile venue, the order including requirements for the software and one or more of the available software services; and
         generate venue specifications based on the ordered software,
      wherein the modular update delivery module is further configured to:
         receive, from the venue update manager, the venue specifications based on the ordered software;
         receive, from the container orchestrator, the request for the correct version of one or more containers to run on the requesting mobile venue;
         generate a deployable container based on the venue specifications and the one or more containers to run on the requesting mobile venue, the deployable container including the updated container; and
         transmit to the requesting mobile venue the deployable container,
      wherein the container orchestrator is further configured to deploy software on the requesting mobile venue using the deployable container.
2. The system of clause 1, wherein the modular update delivery module is further configured to provide a container registry that is configured to store the updated container for installation in the requesting mobile venue.
3. The system of clause 1, wherein the modular update delivery module is further configured to provide a secrets storage configured to provide role-based access controls.
4. The system of clause 1, wherein the modular update delivery module is further configured to monitor a configuration management repository, to detect changes to the configuration management repository, and, responsive to detecting a change in the configuration management repository, transmit changed component files to the requesting mobile venue.
5. The system of clause 1, wherein the container orchestrator is configured to generate an engineering configuration by applying a change overlay to the venue specifications.
6. The system of clause 1, wherein the requesting mobile venue is a mobile vehicle.
7. The system of clause 6, wherein the updated container is configured to be deployed on a server located on the mobile vehicle.
8. The system of clause 1, wherein the modular update delivery module is implemented on a server that is different from a venue on which the container orchestrator is implemented.
9. A software deployment system comprising:
   a network interface;
   non-volatile memory configured to store computer-executable instructions; and
   one or more processors configured to control operation of the network interface and to execute the computer-executable instructions stored on the non-volatile memory, the computer executable instructions configured to cause the software deployment system to:
      receive a request for software deployment on a server on a mobile venue;
      generate a venue specification based on the request for software deployment;
      identify individual components of software to install based on the venue specification; and
      deliver the identified individual components to the mobile venue server.
10. The system of clause 9, wherein the mobile venue is an aircraft.
11. The system of clause 9, wherein the individual components are delivered in one or more containers.
12. The system of clause 9, wherein the venue specification is configured to ensure compliance with legal regulations related to the mobile venue.
13. The system of clause 9, wherein the venue specification represents changes to a base configuration to accommodate different features or capabilities of the mobile venue.
14. The system of clause 13, wherein the base configuration represents a generic configuration for a plurality of disparate mobile venues.
15. A method for deploying software on one or more mobile venues, the method comprising:
   receiving a request for new software for a plurality of mobile venues;
   receiving software based on the request, the software not specific to at least one of the mobile venues;
   for each mobile venue of the plurality of mobile venues, generating a venue specification for the software, the venue specification based on a base configuration that is generic to the plurality of mobile venues;
   for each mobile venue of the plurality of mobile venues, delivering one or more containers with the software based on the venue specification specific to the mobile venue; and
   for each mobile venue of the plurality of mobile venues, generating an engineering configuration based on the venue specification.
16. The method of clause 15, wherein at least one of the plurality of mobile venues is an aircraft.
17. The method of clause 15, wherein the request for new software comprises a combination of one or more product entities.
18. The method of clause 15, wherein the venue specification is configured to ensure compliance with legal regulations specific to the particular mobile venue.
19. The method of clause 15, wherein the received software is not compatible with at least one of the plurality of mobile venues and the method further comprises employing the engineering configuration to modify at least one aspect of the received software to render the software compatible with the at least one of the plurality of mobile venues.
20. The method of clause 15 further comprising analyzing the received software to detect vulnerabilities or security issues related to each of the plurality of mobile venues.

## Claims

1. A software deployment system comprising:
a modular update delivery module configured to:
receive an updated container;
scan the updated container for vulnerabilities;
receive deployment characteristics related to the updated container; and
specify to which one or more mobile venues of a plurality of mobile venues the updated container is to be deployed;
a container orchestrator implemented on a requesting mobile venue, the container orchestrator configured to send a request to the modular update delivery module for a correct version of one or more containers to run; and
a venue update manager configured to:
provide a catalog of available software services;
receive an order for software to be installed on the requesting mobile venue, the order including requirements for the software and one or more of the available software services; and
generate venue specifications based on the ordered software and configuration change overlays, wherein the venue specifications are configured to enable bundling distribution, and deployment of the software to be installed on the requesting mobile venue and wherein the venue specifications are specific to a particular mobile venue or class of mobile venues of the plurality of mobile venues,
wherein the modular update delivery module is further configured to:
receive, from the venue update manager, the venue specifications based on the ordered software;
receive, from the container orchestrator, the request for the correct version of one or more containers to run on the requesting mobile venue;
generate a deployable container based on the venue specifications and the one or more containers to run on the requesting mobile venue, the deployable container including the updated container; and
transmit to the requesting mobile venue the deployable container, wherein the container orchestrator is further configured to:
generate an engineering configuration for the requesting mobile venue based on converting the venue specification using one or more server specific configurations, wherein the engineering configuration is configured to enable deployment of software from the deployable container on a specific environment of a venue server of the requesting mobile venue; and
deploy the software on the requesting mobile venue using the deployable container and the engineering configuration.

2. The system of claim 1, wherein the modular update delivery module is further configured to provide a container registry that is configured to store the updated container for installation in the requesting mobile venue.

3. The system of claim 1 or claim 2, wherein the modular update delivery module is further configured to provide a secrets storage configured to provide role-based access controls.

4. The system of any preceding claim, wherein the modular update delivery module is further configured to monitor a configuration management repository, to detect changes to the configuration management repository, and, responsive to detecting a change in the configuration management repository, transmit changed component files to the requesting mobile venue.

5. The system of any preceding claim, wherein the container orchestrator is configured to generate an engineering configuration by applying a change overlay to the venue specifications to enable modification of at least one aspect of the deployable container to render the software compatible with the requesting mobile venue.

6. The system of any preceding claim, wherein the requesting mobile venue is a mobile vehicle.

7. The system of claim 6, wherein the updated container is configured to be deployed on a server located on the mobile vehicle.

8. The system of any preceding claim, wherein the modular update delivery module is implemented on a server that is different from a venue on which the container orchestrator is implemented.
